(19) **Europäisches Patentamt / European Patent Office / Office européen des brevets**

(11) **EP 3 929 726 B1**

(12) # FASCICULE DE BREVET EUROPEEN

(45) Date de publication et mention de la délivrance du brevet:
**30.07.2025 Bulletin 2025/31**

(21) Numéro de dépôt: **21180397.8**

(22) Date de dépôt: **18.06.2021**

(51) Classification Internationale des Brevets (IPC):
**G06F 7/72** $^{(2006.01)}$ **H04L 9/00** $^{(2022.01)}$
**G06F 7/76** $^{(2006.01)}$

(52) Classification Coopérative des Brevets (CPC):
**G06F 7/723; G06F 7/764; H04L 9/004;**
H04L 2209/046

(54) **PROCEDE DE TRAITEMENT CRYPTOGRAPHIQUE, DISPOSITIF ELECTRONIQUE ET PROGRAMME D'ORDINATEUR ASSOCIES**

KRYPTOGRAPHISCHES VERARBEITUNGSVERFAHREN, ENTSPRECHENDE ELEKTRONISCHE VORRICHTUNG UND ENTSPRECHENDES COMPUTERPROGRAMM

CRYPTOGRAPHIC PROCESSING METHOD, ASSOCIATED ELECTRONIC DEVICE AND COMPUTER PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.06.2020 FR 2006695**

(43) Date de publication de la demande:
**29.12.2021 Bulletin 2021/52**

(73) Titulaire: **IDEMIA France**
**92400 Courbevoie (FR)**

(72) Inventeurs:
- **BARBU, Guillaume**
  **92400 Courbevoie (FR)**
- **BATTISTELLO, Alberto**
  **92400 Courbevoie (FR)**
- **BETTALE, Luk**
  **92400 Courbevoie (FR)**
- **DEBANDE, Nicolas**
  **92400 Courbevoie (FR)**
- **GIRAUD, Christophe**
  **92400 Courbevoie (FR)**
- **LOPEZ, Sarah**
  **92400 Courbevoie (FR)**
- **RONDEPIERRE, Franck**
  **92400 Courbevoie (FR)**

(74) Mandataire: **Idemia**
**2, place Samuel de Champlain**
**92400 Courbevoie (FR)**

(56) Documents cités:
**CN-A- 108 111 309    FR-A1- 3 004 043**

- **MARC JOYE: "Protecting RSA against Fault Attacks: The Embedding Method", FAULT DIAGNOSIS AND TOLERANCE IN CRYPTOGRAPHY (FDTC), 2009 WORKSHOP ON, IEEE, PISCATAWAY, NJ, USA, 6 September 2009 (2009-09-06), pages 41 - 45, XP031627635, ISBN: 978-1-4244-4972-9**
- **HA JAECHEOL ET AL: "A New CRT-RSA Scheme Resistant to Power Analysis and Fault Attacks", 1 November 2008 (2008-11-01), Los Alamitos, CA, USA, pages 351 - 356, XP055785324, ISBN: 978-0-7695-3407-7, Retrieved from the Internet <URL:https://ieeexplore.ieee.org/stampPDF/ getPDF.jsp?tp=&arnumber=4682266&ref=> [retrieved on 20210312], DOI: 10.1109/ ICCIT.2008.161**
- **BATTISTELLO ALBERTO: "On the security of embedded systems against physical attacks", 29 June 2016 (2016-06-29), Paris, pages 1 - 157, XP055860158, Retrieved from the Internet <URL:https://www.theses.fr/2016SACLV047.pdf> [retrieved on 20211110]**

**EP 3 929 726 B1**

**Description**

La présente invention concerne le domaine technique de la cryptographie.

Elle concerne plus particulièrement un procédé de traitement cryptographique, ainsi qu'un dispositif électronique et un programme d'ordinateur associés.

Dans ce domaine technique, on manipule dans différentes applications des éléments d'un groupe d'ordre fini muni d'une opération.

Par exemple, pour la signature ou le déchiffrement d'un message au moyen d'une clé secrète, on associe un premier élément du groupe au message et on détermine un second élément égal à la combinaison, au moyen de ladite opération, d'éléments égaux au premier élément et en nombre égal à un premier nombre lié à la clé secrète.

La détermination d'un tel second élément est relativement simple ; pour des groupes bien choisis, il est en revanche très difficile (en pratique : impossible dans un temps raisonnable) de déterminer le premier nombre sur la base du premier élément et du second élément (problème du logarithme discret), ce qui permet de conserver le caractère secret du premier nombre.

Les calculs mis en œuvre pour déterminer le second élément sont toutefois l'objet d'attaques par des personnes malintentionnées cherchant par exemple à connaître la clé secrète.

Afin de rendre plus difficiles voire d'empêcher de telles attaques, il a déjà été proposé (comme décrit par exemple dans "(Virtually) Free Randomization Techniques for Elliptic Curve Cryptography", de M. Ciet et M. Joye, ICICS 2003, LNCS 2836, pp. 348-359, 2003) que la détermination du second élément soit réalisée par des calculs différents à chaque mise en œuvre de l'algorithme cryptographique ; pour ce faire :

- on détermine un quotient et un reste par division euclidienne du premier nombre par un nombre aléatoire (différent pour chaque mise en œuvre de l'algorithme cryptographique) ;
- on détermine un troisième élément égal à la combinaison, au moyen de ladite opération, d'éléments égaux au premier élément et en nombre égal au produit du quotient et du nombre aléatoire ;
- on détermine un quatrième élément égal à la combinaison, au moyen de ladite opération, d'éléments égaux au premier élément et en nombre égal au reste ;
- on détermine le second élément par combinaison, au moyen de ladite opération, du troisième élément et du quatrième élément.

Une telle contremesure peut toutefois être contournée lorsque l'attaquant peut choisir la clé secrète utilisée par l'algorithme cryptographique concerné.

En effet, en choisissant dans ce cas une clé secrète de valeur faible, le quotient obtenu lors de l'exécution de l'algorithme cryptographique est quasi-systématiquement nul et les différentes mises en œuvre de l'algorithme cryptographique sont donc finalement identiques.

L'attaquant peut ainsi améliorer sa connaissance des opérations effectuées lors de l'exécution de l'algorithme cryptographique et utiliser cette connaissance pour attaquer d'autres utilisations de l'algorithme cryptographique, avec une autre clé secrète (attaque par canal auxiliaire profilée ou *"Profiled Side Channel Attack"*).

Dans ce contexte, l'invention propose un procédé de traitement cryptographique comprenant la détermination, dans un groupe d'ordre fini muni d'une opération et à partir d'un premier élément de ce groupe, d'un second élément égal à la combinaison, au moyen de ladite opération, d'éléments (de ce groupe) égaux au premier élément et en nombre égal à un premier nombre, caractérisé par les étapes suivantes :

- obtention d'un second nombre déterminé en ajoutant au premier nombre ledit ordre ou un multiple dudit ordre ;
- détermination d'un nombre aléatoire ;
- détermination d'un quotient et d'un reste en utilisant la division euclidienne du second nombre par le nombre aléatoire ;
- obtention d'un troisième élément égal à la combinaison, au moyen de ladite opération, d'éléments (de ce groupe) égaux au premier élément et en nombre égal au produit du quotient et du nombre aléatoire ;
- obtention d'un quatrième élément égal à la combinaison, au moyen de ladite opération, d'éléments (de ce groupe) égaux au premier élément et en nombre égal au reste ;
- détermination du second élément par combinaison du troisième élément et du quatrième élément au moyen de ladite opération.

Grâce à l'ajout de l'ordre ou d'un multiple de l'ordre, le second nombre a toujours une valeur importante et son quotient par le nombre aléatoire sera non nul. La contremesure décrite plus haut sera donc efficace, même si un attaquant impose une valeur faible au premier nombre.

Le résultat recherché (second élément) sera toutefois inchangé du fait que la combinaison, par ladite opération,

2

d'éléments égaux à un élément donné (ici le premier élément) et en nombre égal à l'ordre du groupe produit l'élément neutre du groupe (du fait du caractère cyclique du groupe).

**Le** procédé peut comprendre une étape de détermination d'un autre nombre aléatoire, et le second nombre peut alors être obtenu en ajoutant au premier nombre le produit de l'autre nombre aléatoire et dudit ordre.

Le procédé est par exemple mis en œuvre au sein d'un dispositif électronique comprenant un module de mémorisation. Le premier nombre et/ou ledit ordre peuvent alors être mémorisés dans le module de mémorisation sous forme masquée. Le second nombre peut dans ce cas être mémorisé lui aussi, éventuellement sous forme masquée.

Le procédé peut par ailleurs comprendre une étape de construction d'un masque égal à la somme d'un premier nombre intermédiaire et du produit d'un second nombre intermédiaire par ledit nombre aléatoire. L'étape d'obtention du second nombre peut alors comprendre une étape d'application du masque construit. Ainsi, le quotient peut être déterminé en utilisant le second nombre intermédiaire et le reste peut être déterminé en utilisant le premier nombre intermédiaire.

Selon une première possibilité de réalisation, le premier nombre intermédiaire et le second nombre intermédiaire peuvent être déterminés par tirage aléatoire.

Selon une seconde possibilité de réalisation, lorsque le premier nombre est mémorisé masqué par un masque initial, le second nombre intermédiaire et le premier nombre intermédiaire peuvent respectivement être déterminés comme quotient et reste de la division euclidienne du masque initial par une puissance de deux (cette puissance de deux étant par exemple égale à $2^k$ où k est la longueur en bits du nombre aléatoire).

Dans certains modes de réalisation, le groupe susmentionné peut être le groupe multiplicatif $\mathbb{Z}/p\mathbb{Z} - \{0\}$, où p est un nombre premier, l'ordre étant alors égal à (p-1). L'opération est dans ce cas la multiplication modulaire modulo p.

Dans d'autres modes de réalisation, le groupe est un sous-groupe de points d'une courbe elliptique, ladite opération étant une addition de points de la courbe elliptique.

Dans d'autres modes de réalisation encore, le groupe est un sous-groupe multiplicatif de $\mathbb{Z}/p\mathbb{Z} - \{0\}$, où p est un nombre premier. L'ordre est alors un diviseur de (p-1). L'opération est dans ce cas la multiplication modulaire modulo p.

L'invention propose également un dispositif électronique comprenant un processeur et un module de mémorisation stockant des instructions de programme d'ordinateur conçues, lorsque ces instructions sont exécutées par le processeur, pour déterminer, dans un groupe d'ordre fini muni d'une opération et à partir d'un premier élément de ce groupe, un second élément égal à la combinaison, au moyen de ladite opération, d'élément égaux au premier élément et en nombre égal à un premier nombre, au moyen des étapes suivantes :

- obtention d'un second nombre déterminé en ajoutant au premier nombre ledit ordre ou un multiple dudit ordre ;
- détermination d'un nombre aléatoire ;
- détermination d'un quotient et d'un reste en utilisant la division euclidienne du second nombre par le nombre aléatoire ;
- obtention d'un troisième élément égal à la combinaison, au moyen de ladite opération, d'éléments égaux au premier élément et en nombre égal au produit du quotient et du nombre aléatoire ;
- obtention d'un quatrième élément égal à la combinaison, au moyen de ladite opération, d'éléments égaux au premier élément et en nombre égal au reste ;
- détermination du second élément par combinaison du troisième élément et du quatrième élément au moyen de ladite opération.

L'invention propose enfin un programme d'ordinateur comprenant des instructions conçues pour mettre en œuvre un procédé tel que présenté ci-dessus lorsque ces instructions sont exécutées par un processeur.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

De plus, diverses autres caractéristiques de l'invention ressortent de la description annexée effectuée en référence aux dessins qui illustrent des formes, non limitatives, de réalisation de l'invention et où :

- la figure 1 représente schématiquement un dispositif électronique conforme à l'invention,

- la figure 2 est un logigramme représentant les étapes principales d'un procédé de traitement cryptographique conforme à l'invention,

- la figure 3 est un logigramme représentant des étapes mises en œuvre au cours du procédé de traitement cryptographique de la figure 2, et

- la figure 4 est un logigramme représentant un procédé de traitement cryptographique selon un autre mode de réalisation de l'invention.

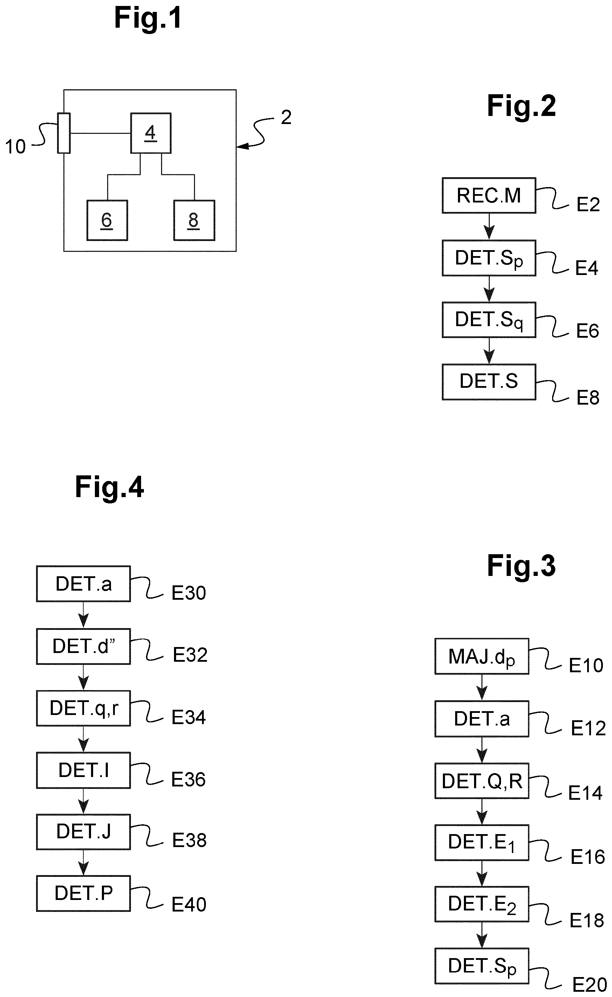

La figure 1 représente schématiquement un dispositif électronique 2 comprenant un processeur 4 (par exemple un microprocesseur), un module de mémorisation 6, une mémoire vive 8 et un module de communication 10.

Le module de mémorisation 6 mémorise des instructions de programme d'ordinateur conçues pour mettre en œuvre un procédé de traitement cryptographique tel que l'un au moins de ceux décrits ci-dessous en référence aux figures 2, 3 et 4 lorsque ces instructions sont exécutées par le processeur 4. Le module de mémorisation 6 est par exemple en pratique un disque dur ou une mémoire non-volatile (éventuellement réinscriptible).

La mémoire vive 8 peut quant à elle mémoriser certains au moins des éléments manipulés lors des différents traitements effectués au cours de ce procédé de traitement cryptographique.

Le module de communication 10 est relié au processeur 4 de manière à permettre au processeur 4 de recevoir des données en provenance d'un autre dispositif électronique (non représenté) et/ou d'émettre des données à destination d'un autre dispositif électronique (non représenté).

La figure 2 représente les étapes principales d'un procédé de traitement cryptographique selon un premier mode de réalisation de l'invention.

Ce procédé débute à l'étape E2 par la réception d'un message M par le processeur 4 et via le module de communication 10. Dans le contexte décrit ici, le message M a une longueur d'au moins 1024 bits, par exemple une taille de 1024 bits, 2048 bits, 3072 bits ou 4096 bits (soit ici une longueur comprise entre 1024 bits et 4096 bits).

Le procédé de la figure 2 vise à déterminer la signature S du message M au moyen d'un algorithme de type RSA CRT. (En variante, le message M pourrait être un message chiffré et l'application de l'algorithme de type RSA CRT de la figure 2 permettrait alors le déchiffrement du message chiffré M en un message déchiffré S.)

Pour ce faire, le module de mémorisation 6 mémorise des données représentatives des éléments $p$, $q$, $d_p$, $d_q$, $i_q$ de la clé privée à utiliser (avec les notations habituellement utilisées pour l'algorithme RSA CRT et $i_q = q^{-1} \bmod p$), où $p$ et $q$ sont des nombres premiers. Chacun des éléments a ici une longueur en bits égale à la moitié de la taille du message M, soit ici une longueur en bits d'au moins 512 bits, par exemple comprise entre 512 bits et 2048 bits.

Dans l'exemple décrit ici, ces éléments sont mémorisés (dans le module de mémorisation 6) sous forme masquée, c'est-à-dire que le module de mémorisation 6 mémorise :

$$p' = p + m_p$$

$$q' = q + m_q$$

$$d_p' = d_p + m_{dp}$$

$$d_q' = d_q + m_{dq}$$

$$i_q' = i_q + m_{iq}$$

ainsi que les masques $m_d$, $m_q$, $M_{dp}$, $m_{dq}$, $M_{iq}$.

Chaque masque a ici une longueur égale à celle de l'élément qu'il masque, soit ici une longueur d'au moins 512 bits, par exemple comprise entre 512 bits et 2048 bits. Chaque valeur masquée nécessite quant à elle 1 bit de plus pour sa mémorisation que l'élément et le masque concernés (pour mémoriser une éventuelle retenue) et a donc ici une longueur d'au moins 513 bits, par exemple comprise entre 513 bits et 2049 bits.

Le procédé de la figure 2 comprend une étape E4 de détermination d'un premier résultat partiel $S_p$ tel que $S_p = M^{dp} \bmod p$.

Dans le cas où les valeurs sont manipulées masquées comme décrit ici, l'étape E4 de détermination du premier résultat partiel détermine en pratique $S_p' = M^{dp} \bmod k_p.p$, où $k_p$ est un nombre aléatoire et où $k_p.p$ est déterminé par l'opération $k_p.p'-k_p.m_p$. Cette étape E4 est mise en œuvre conformément au procédé décrit plus loin en référence à la figure 3.

Le procédé de la figure 2 comprend également une étape E6 de détermination d'un second résultat partiel $S_q$ tel que $S_q = M^{dq} \bmod q$.

Dans le cas où les valeurs sont manipulées masquées comme décrit ici, l'étape E6 de détermination du second résultat partiel détermine en pratique $S_q' = M^{dq} \bmod k_q.q$, où $k_q$ est un nombre aléatoire et où $k_q.q$ est déterminé par l'opération $k_q.q'-k_q.m_q$.

Cette étape E6 peut être mise en œuvre par un procédé analogue à celui décrit ci-dessous en référence à la figure 3 (en remplaçant p par q, $d_p$ par $d_q$ et donc $k_p$ par $k_q$, p' par q', $d_p$' par $d_q$', $m_p$ par $m_q$ et $m_{dp}$ par $m_{dq}$ dans la description de la figure 3).

Le procédé de la figure 2 comprend alors une étape E8 de détermination du résultat S de l'algorithme RSA CRT (c'est-à-dire ici de détermination de la signature S) par combinaison du premier résultat partiel $S_p$ et du second résultat partiel $S_q$ conformément au théorème des restes chinois : $S = S_q + q.[i_q.(S_p-S_q) \bmod p]$.

Dans l'implémentation utilisée ici où les éléments de la clé privée sont mémorisés masqués comme indiqué ci-dessus, le résultat S est obtenu comme suit :

- on détermine tout d'abord $W = (S_p'-S_q').i_q'-(S_p'-S_q').m_{iq} \bmod k_p.p$ ;
- puis on détermine S par $S = W.q' - W.m_q + S_q' \bmod N$, où $N = (k_p.p.k_q.q)/(k_p.k_q)$.

La figure 3 représente les étapes d'un procédé de traitement cryptographique conforme à l'invention. Ce procédé vise à réaliser l'exponentiation modulaire d'une valeur M à la puissance $d_p$ modulo p. On désigne dans la suite "exposant" le nombre $d_p$. Dans l'exemple décrit ici, il est appliqué pour réaliser l'étape E4 (ou l'étape E6) décrite ci-dessus, comme déjà indiqué. Ce procédé pourrait toutefois être appliqué dans d'autres cas où une exponentiation modulaire est utilisée.

L'exponentiation modulaire $M^{dp} \bmod p$ revient, dans le groupe multiplicatif $\mathbb{Z}/p\mathbb{Z} - \{0\}$, à combiner, au moyen de la multiplication modulaire modulo p, des éléments égaux à l'élément M et en nombre égal à l'exposant $d_p$. L'ordre du groupe multiplicatif $Z/pZ - \{0\}$ vaut (p-1).

Le procédé de la figure 3 débute par une étape E10 de mise à jour de l'exposant $d_p$ en lui ajoutant l'ordre (p-1).

Dans l'exemple décrit ici où le nombre premier p et l'exposant $d_p$ sont mémorisés sous forme masquée comme déjà indiqué, le processeur 4 ajoute lors de l'étape E10 l'ordre masqué (p'-1) à l'exposant masqué $d_p$' et mémorise le résultat comme exposant courant $d_p$". Par ailleurs, afin que l'exposant courant $d_p$" soit lui aussi masqué par le masque $m_{dp}$, on soustrait ici en outre à l'exposant courant $d_p$" la valeur du masque $m_p$.

Cet exposant courant $d_p$" vaut donc $d_p'+(p'-1) - m_p = [d_p + (p-1)] + m_{dp}$ .

En pratique, l'exposant courant $d_p$" peut être mémorisé en lieu et place de l'exposant dp' dans le module de mémorisation 6 (pour utilisation lors de mises en œuvre ultérieures du procédé de traitement cryptographique), ou seulement mémorisé dans la mémoire vive 8 (pour utilisation seulement lors de la présente mise en œuvre du procédé).

Quoi qu'il en soit, si certaines mises en œuvre prévoient que l'utilisateur puisse choisir la valeur de l'exposant $d_p$ (et qu'un attaquant puisse ainsi choisir un exposant $d_p$ de petite valeur comme expliqué en introduction), la valeur du nombre premier p n'est au contraire pas paramétrable et est choisie suffisamment élevée par les concepteurs du système (la valeur de p étant codée sur au moins 512 bits). L'exposant courant $d_p$" utilisé dans la suite aura donc nécessairement une valeur élevée.

En variante pour l'étape E10, il est possible de mettre à jour l'exposant $d_p$ en lui ajoutant un multiple de l'ordre (p-1). L'étape E10 comprend par exemple dans ce cas le tirage d'un nombre aléatoire a' et la mise à jour de l'exposant $d_p$ en lui ajoutant le produit du nombre aléatoire a' et de l'ordre (p-1). La longueur en bits du nombre aléatoire a' est par exemple comprise entre 32 bits et 128 bits. Dans le mode de réalisation décrit ici mémorisant les éléments de la clé privée sous forme masquée, afin que l'exposant courant $d_p$" (obtenu après mise à jour de l'exposant masqué $d_p$') soit lui aussi masqué par le masque $m_{dp}$, on soustrait ici en outre à l'exposant courant $d_p$" le produit du nombre aléatoire a' et de la valeur du masque $m_p$.

L'exposant courant $d_p$" obtenu lors de l'étape E10 vaut donc dans ce cas :

$$d_p' + a'.(p' - 1) - a'.m_p = [d_p + a'.(p-1)] + m_{dp} .$$

Le procédé de la figure 3 se poursuit à l'étape E12 à laquelle le processeur 4 détermine un nombre a (ayant par exemple une longueur k supérieure à 16 bits, ici une longueur k de 32 bits) par tirage aléatoire.

Le processeur 4 détermine alors à l'étape E14 le quotient Q' et le reste R' de la division euclidienne de l'exposant courant $d_p$" par le nombre aléatoire a. On a donc :

$$d_p'' = Q'.a + R' .$$

Dans l'exemple décrit ici où l'exposant courant $d_p$" est masqué, on retire en outre le masquage en soustrayant $m_{dp}/a$ au quotient masqué Q' de manière à obtenir le quotient non masqué Q, et en soustrayant $(m_{dp} \bmod a)$ au reste masqué R' pour obtenir le reste non masqué R :

$$Q = Q' - m_{dp}/a$$

$$R = R' - m_{dp} \bmod a.$$

Dans le cas où le reste R est négatif (R < 0), le processeur 4 effectue en outre une étape corrective au cours de laquelle la valeur aléatoire a est ajoutée au reste R et le quotient Q est décrémenté d'une unité.

On a alors :

$$Q.a + R = d''_p - m_{dp} = d_p.$$

Le processeur 4 peut ainsi déterminer à l'étape E16 un premier exposant modulaire $E_1$ en effectuant l'exponentiation modulaire modulo p (ou modulo $k_p.p$ dans le cas de l'utilisation de valeurs masquées comme indiqué plus haut) de l'élément M à la puissance Q.a (c'est-à-dire à une puissance égale au produit du quotient Q et du nombre aléatoire a) :

$$E_1 = M^{Q.a} \bmod p \text{ (ou } E_1 = M^{Q.a} \bmod k_p.p \text{ dans le cas de l'utilisation de valeurs masquées).}$$

Dans le groupe multiplicatif $\mathbb{Z}/p\mathbb{Z} - \{0\}$, cette opération d'exponentiation modulaire revient à combiner, au moyen de la multiplication modulaire modulo p (ou modulo $k_p.p$ dans le cas d'utilisation de valeurs masquées), des éléments égaux à l'élément M et en nombre égal au produit du quotient Q et du nombre aléatoire a.

Le processeur 4 peut ainsi déterminer à l'étape E18 un second exposant modulaire $E_2$, en effectuant l'exponentiation modulaire modulo p (ou modulo $k_p.p$ dans le cas de l'utilisation de valeurs masquées) de l'élément M à la puissance R :

$$E_2 = M^R \bmod p \text{ (ou } E_2 = M^R \bmod k_p.p \text{ dans le cas de valeurs masquées)}$$

Dans le groupe multiplicatif $\mathbb{Z}/p\mathbb{Z} - \{0\}$, cette opération d'exponentiation modulaire revient à combiner, au moyen de la multiplication modulaire modulo p (ou modulo $k_p.p$ dans le cas de valeurs masquées), des éléments égaux à l'élément M et en nombre égal au reste R.

Le processeur détermine alors à l'étape E20 le résultat recherché $S_p$ ($S_p = M^{dp} \bmod p$, ou $S_p' = M^{dp} \bmod k_p.p$ dans le cas de l'utilisation de valeurs masquées) en combinant le premier exposant modulaire $E_1$ et le second exposant modulaire $E_2$ par multiplication modulaire modulo p (ou modulo $k_p.p$ dans le cas de valeurs masquées) : $S_p = E_1.E_2 \bmod p$ (ou $S_p' = E_1.E_2 \bmod k_p.p$).

On décrit à présent deux variantes qui permettent d'éviter d'avoir à calculer la valeur $m_{dp}/a$ à l'étape E14.

Selon une première variante, l'étape E12 est simultanée ou antérieure à l'étape E10 et comprend, outre la détermination du nombre a par tirage aléatoire, la détermination de deux nombres $a_Q$, $a_R$ par tirage aléatoire et la construction d'un masque de remplacement m' égal à la somme du nombre aléatoire $a_R$ et du produit du nombre aléatoire a et du nombre aléatoire $a_Q$ : $m' = a_R + a.a_Q$.

L'étape E10 comprend dans ce cas, outre les opérations décrites ci-dessus, le remplacement du masque $m_{dp}$ par le masque de remplacement m' : l'exposant courant $d_p''$ vaut alors $d_p' + (p'-1) - m_p + m' - m_{dp} = [d_p + (p-1)] + m'$.

En notant comme ci-dessus $Q' = d_p''/a$ et $R' = d_p'' \bmod a$ (c'est-à-dire $d_p''=Q'.a+R'$), l'obtention du quotient non masqué Q et du reste non masqué R à l'étape E14 peut alors être réalisée par : $Q = Q' - a_Q$ et $R = R' - a_R$.

Selon une seconde variante, l'étape E12 est simultanée ou antérieure à l'étape E10 et comprend, outre la détermination du nombre a par tirage aléatoire, la détermination d'un premier nombre $m_R$ égal à $m_{dp} \bmod 2^k$ et d'un second nombre $m_Q$ égal à $m_{dp}/2^k$ (où k est comme déjà indiqué la longueur en bits du nombre aléatoire a), et la construction d'un masque de remplacement m' égal à la somme du premier nombre $m_R$ et du produit du nombre aléatoire a et du second nombre $m_Q$ : $m' = m_R + a.m_Q$. (Par rapport à la première variante, cette seconde variante évite le tirage de deux nombres aléatoires ; par ailleurs, la division par une puissance de 2 utilisée ici est peu coûteuse en temps de calcul puisqu'elle peut être réalisée par un décalage de k bits vers la droite du masque $m_{dp}$).

Comme pour la première variante, l'étape E10 comprend alors, outre les opérations décrites ci-dessus, le remplacement du masque $m_{dp}$ par le masque de remplacement m' : l'exposant courant $d_p''$ vaut alors $d_p'+(p'-1) - m_p + m' - m_{dp} = [d_p + (p-1)] + m'$.

L'obtention du quotient non masqué Q et du reste non masqué R à l'étape E14 peut alors être réalisée par : $Q = Q' - m_Q$ et $R = R' - m_R$ (toujours avec $Q' = d_p''/a$ et $R' = d_p'' \bmod a$).

La figure 4 représente un procédé de traitement cryptographique selon un second mode de réalisation de l'invention.

Ce procédé met en œuvre des opérations dans un groupe fini G d'ordre n muni d'une opération notée ici "*". Ce groupe G est par exemple un sous-groupe d'ordre fini n de points d'une courbe elliptique E et l'opération * est dans ce cas l'addition de deux points de la courbe elliptique E.

Le procédé de la figure 4 vise à déterminer, à partir d'un premier élément M du groupe G (ici à partir d'un point M de la courbe elliptique E), un second élément P égal à la combinaison, au moyen de l'opération *, d'éléments (du groupe G) égaux au premier élément M et en nombre égal à un nombre entier d. Le premier élément M peut être par exemple une partie au moins d'un message.

Dans le cas décrit ici où le groupe G est un sous-groupe de points d'une courbe elliptique E, on note ceci : P = [d] M.

On cherche par exemple à déterminer de la sorte un second élément P dans le cadre d'un échange de clés de type Diffie-Hellman (le nombre entier d jouant alors le rôle de clé privée), notamment :

- lorsque le premier élément M est un générateur du groupe G, le second élément P étant alors transmis (ici via le module de communication 10) à un partenaire de communication (avec lequel l'échange de clés est réalisé) ;

- lorsque le premier élément M est reçu (ici via le module de communication 10) d'un partenaire de communication (avec lequel l'échange de clés est réalisé), le second élément P étant alors le secret partagé.

Le module de mémorisation 6 mémorise le nombre d sous forme masquée, c'est-à-dire que sont mémorisés dans le module de mémorisation 6 le nombre masqué d' et le masque $m_d$ tels que d' = d + $m_d$.

L'ordre n, le nombre d et le masque $m_d$ ont par exemple une longueur (en bits) d'au moins 160 bits, par exemple comprise entre 160 bits et 512 bits (le nombre masqué ayant quant à lui une longueur augmentée de 1 bit par rapport à la longueur du nombre d et du masque $m_d$ afin de pouvoir mémoriser une retenue éventuelle, soit une longueur d'au moins 161 bits, par exemple comprise entre 161 bits et 513 bits).

Le procédé de la figure 4 débute par une étape E30 de détermination d'un nombre a par tirage aléatoire.

Le procédé de la figure 4 se poursuit par une étape E32 de détermination d'un nombre d" en ajoutant au nombre d (ici en pratique à sa version masquée d') l'ordre n.

Ainsi, même lorsque la mise en œuvre envisagée permet de choisir d et qu'un attaquant pourrait choisir à dessein une valeur faible pour d, le nombre d" sera élevé (l'ordre n étant élevé et en général non modifiable par l'utilisateur).

Dans la mise en œuvre avec masquage décrite ici, on a donc : d" = d' + n.

Selon une variante de réalisation de l'étape E32, on pourrait ajouter au nombre d (ou ici à sa version masquée d') un multiple de l'ordre n. Ce multiple peut éventuellement être déterminé par tirage d'un nombre aléatoire a' (de longueur comprise par exemple entre 32 bits et 128 bits) et multiplication de l'ordre n par ce nombre aléatoire a' (le multiple valant dans ce cas a'.n).

Le procédé de la figure 4 se poursuit par une étape E34 de détermination d'un quotient q et d'un reste r en utilisant la division euclidienne du nombre d" obtenu à l'étape E32 par le nombre aléatoire a.

Dans l'exemple décrit ici, pour tenir compte du masquage, cette étape comprend par exemple les opérations suivantes :

$$c = 1 \text{ si } (d'' \bmod a) < (m_d \bmod a), \text{ sinon } c = 0$$

$$q = d''/a - m_d/a - c$$

$$r = (d'' \bmod a) - (m_d \bmod a) + c.a$$

L'utilisation de la variable c permet d'éviter d'avoir dans certains cas un reste r négatif à cause de l'opération de démasquage (c'est-à-dire de soustraction de $m_d$ mod a).

Le procédé de la figure 4 comprend alors une étape E36 d'obtention (c'est-à-dire ici de détermination) d'un troisième élément I égal à la combinaison, au moyen de l'opération *, d'éléments égaux au premier élément M et en nombre égal au produit q.a du quotient q et du nombre aléatoire a.

Dans le cas décrit ici (où le groupe G est un sous-groupe de points d'une courbe elliptique E), le troisième élément I vaut donc : [q.a] M.

Le procédé de la figure 4 comprend alors une étape E38 d'obtention (c'est-à-dire ici de détermination) d'un quatrième élément J égal à la combinaison, au moyen de l'opération *, d'éléments égaux au premier élément M et en nombre égal au reste r.

Dans le cas décrit ici (où le groupe G est un sous-groupe de points d'une courbe elliptique E), le quatrième élément J vaut donc : [r] M.

Le procédé de la figure 4 se termine alors par une étape E40 de détermination du second élément P par combinaison du troisième élément I et du quatrième élément J au moyen de l'opération *. Autrement dit, on détermine le second élément P tel que P = I * J.

Selon une variante envisageable pour le procédé qui vient d'être décrit, afin d'éviter le calcul de $m_d/a$ lors de l'étape E34, il est possible de remplacer le masque $m_d$ par un masque m' égal à la somme d'un premier nombre intermédiaire r' et du produit d'un second nombre intermédiaire q' par le nombre aléatoire a.

Le remplacement du masque est par exemple effectué lors de la détermination du nombre d'' à l'étape E32. L'opération effectuée lors de cette étape est dans ce cas :

$$d'' = d' + n + m' - m_d \, .$$

Selon une première possibilité, le premier nombre intermédiaire r' et le second nombre intermédiaire q' peuvent être déterminés (par exemple au cours de l'étape E30) par tirage aléatoire.

Selon une seconde possibilité, le premier nombre intermédiaire r' est déterminé (par exemple lors de l'étape E30) comme égal à $(m_d \bmod 2^k)$ et le second nombre intermédiaire q' est déterminé (par exemple lors de l'étape E30) comme égal à $m_d/2^k$ (cette division par $2^k$ pouvant être réalisée par k décalages d'un bit vers la droite de la représentation binaire de $m_d$), où k est la longueur en bits du nombre aléatoire a.

Selon la variante proposée ici (que l'on utilise la première possibilité ou la seconde possibilité qui viennent d'être mentionnées), le quotient q est déterminé à l'étape E34 en utilisant le second nombre intermédiaire q' (pour enlever le masquage), ici en soustrayant le second nombre intermédiaire q' au quotient masqué d''/a ; le reste r est quant à lui déterminé en utilisant le premier nombre intermédiaire r' (pour enlever le masquage), ici en soustrayant le premier nombre intermédiaire r' au reste masqué (d'' mod a). Autrement dit, on détermine ici lors de l'étape E34 :

$$q = d''/a - q'$$

$$r = (d'' \bmod a) - r' \, .$$

On a décrit ci-dessus le second mode de réalisation dans le cas où le groupe G est un sous-groupe de points d'une courbe elliptique E (groupe dont l'opération * est l'addition de deux points de la courbe elliptique E).

En variante, le groupe G pourrait être par exemple un sous-groupe multiplicatif de $\mathbb{Z}/p\mathbb{Z}$ - {0}, sous-groupe dont l'ordre n est un diviseur de (p-1), où p est un nombre premier. L'opération * est dans ce cas la multiplication modulaire modulo p.

Selon une autre variante, le groupe G pourrait être le groupe multiplicatif Z/pZ -{0}, où p est un nombre premier, l'ordre du groupe G étant dans ce cas égal à (p-1). L'opération * est dans ce cas la multiplication modulaire modulo p.

## Revendications

1. Procédé de traitement cryptographique comprenant la détermination, dans un groupe d'ordre fini muni d'une opération et à partir d'un premier élément (M) de ce groupe, d'un second élément ($S_p$ ; P) égal à la combinaison, au moyen de ladite opération, d'éléments égaux au premier élément (M) et en nombre égal à un premier nombre ($d_p$), le procédé étant mis en œuvre au sein d'un dispositif électronique (2) comprenant un module de mémorisation (6), le premier nombre ($d_p$) étant mémorisé dans le module de mémorisation (6) sous forme masquée, le procédé étant **caractérisé par** les étapes suivantes :

   - obtention (E10 ; E32) d'un second nombre (d'') déterminé en ajoutant au premier nombre ($d_p$) ledit ordre ou un multiple dudit ordre ;
   - détermination (E12 ; E30) d'un nombre aléatoire (a) ;
   - détermination (E14 ; E34) d'un quotient (Q ; q) et d'un reste (R ; r) en utilisant la division euclidienne du second nombre (d'') par le nombre aléatoire (a) ;
   - obtention (E16 ; E36) d'un troisième élément ($E_1$ ; I) égal à la combinaison, au moyen de ladite opération, d'éléments égaux au premier élément (M) et en nombre égal au produit du quotient (Q ; q) et du nombre aléatoire (a) ;

- obtention (E18 ; E38) d'un quatrième élément ($E_2$ ; J) égal à la combinaison, au moyen de ladite opération, d'éléments égaux au premier élément (M) et en nombre égal au reste (R ; r) ;

- détermination (E20 ; E40) du second élément ($S_p$ ; P) par combinaison du troisième élément ($E_1$ ; I) et du quatrième élément ($E_2$ ; J) au moyen de ladite opération,

le procédé comprenant une étape de construction d'un masque égal à la somme d'un premier nombre intermédiaire et du produit d'un second nombre intermédiaire par ledit nombre aléatoire ;

dans lequel l'étape d'obtention du second nombre (d") comprend une étape d'application du masque construit,

dans lequel le quotient (Q ; q) est déterminé en utilisant le second nombre intermédiaire et dans lequel le reste (R ; r) est déterminé en utilisant le premier nombre intermédiaire.

2. Procédé selon la revendication 1, comprenant une étape de détermination d'un autre nombre aléatoire, dans lequel le second nombre (d") est obtenu en ajoutant au premier nombre ($d_p$) le produit de l'autre nombre aléatoire et dudit ordre.

3. Procédé selon la revendication 1 ou 2, dans lequel le premier nombre intermédiaire et le second nombre intermédiaire sont déterminés par tirage aléatoire.

4. Procédé selon la revendication 1 ou 2, dans lequel le premier nombre ($d_p$) est mémorisé masqué par un masque initial et dans lequel le second nombre intermédiaire et le premier nombre intermédiaire sont respectivement déterminés comme quotient et reste de la division euclidienne du masque initial par une puissance de deux.

5. Procédé selon l'une des revendications 1 à 4, dans lequel ledit groupe est le groupe multiplicatif $\mathbb{Z}/p\mathbb{Z}$ - {0}, où p est un nombre premier, ledit ordre étant égal à (p-1).

6. Procédé selon l'une des revendications 1 à 4, dans lequel ledit groupe est un sous-groupe de points d'une courbe elliptique, ladite opération étant une addition de points de la courbe elliptique.

7. Procédé selon l'une des revendications 1 à 4, dans lequel ledit groupe est un sous-groupe multiplicatif de $\mathbb{Z}/p\mathbb{Z}$ - {0}, où p est un nombre premier, et dans lequel ledit ordre est un diviseur de (p-1).

8. Dispositif électronique (2) comprenant un processeur (4) et une module de mémorisation (6) stockant des instructions de programme d'ordinateur conçues, lorsque ces instructions sont exécutées par le processeur (4), pour déterminer, dans un groupe d'ordre fini muni d'une opération et à partir d'un premier élément (M) de ce groupe, un second élément ($S_p$ ; P) égal à la combinaison, au moyen de ladite opération, d'éléments égaux au premier élément (M) et en nombre égal à un premier nombre ($d_p$) mémorisé dans le module de mémorisation (6) sous forme masquée, au moyen d'un procédé comprenant les étapes suivantes :

- obtention (E10 ; E32) d'un second nombre (d") déterminé en ajoutant au premier nombre ($d_p$) ledit ordre ou un multiple dudit ordre ;

- détermination (E12 ; E30) d'un nombre aléatoire (a) ;

- détermination (E14 ; E34) d'un quotient (Q ; q) et d'un reste (R ; r) en utilisant la division euclidienne du second nombre (d") par le nombre aléatoire (a) ;

- obtention (E16 ; E36) d'un troisième élément ($E_1$ ; I) égal à la combinaison, au moyen de ladite opération, d'éléments égaux au premier élément (M) et en nombre égal au produit du quotient (Q ; q) et du nombre aléatoire (a) ;

- obtention (E18 ; E38) d'un quatrième élément ($E_2$ ; J) égal à la combinaison, au moyen de ladite opération, d'éléments égaux au premier élément (M) et en nombre égal au reste (R ; r) ;

- détermination (E20 ; E40) du second élément ($S_p$ ; P) par combinaison du troisième élément ($E_1$ ; I) et du quatrième élément ($E_2$ ; J) au moyen de ladite opération,

ledit procédé comprenant une étape de construction d'un masque égal à la somme d'un premier nombre intermédiaire et du produit d'un second nombre intermédiaire par ledit nombre aléatoire ;

l'étape d'obtention du second nombre (d") comprenant une étape d'application du masque construit, le quotient (Q ; q) étant déterminé en utilisant le second nombre intermédiaire et le reste (R ; r) étant déterminé en utilisant le premier nombre intermédiaire.

**9.** Programme d'ordinateur comprenant des instructions conçues pour mettre en œuvre un procédé selon l'une des revendications 1 à 7 lorsque ces instructions sont exécutées par un processeur (4).

**Patentansprüche**

**1.** Verfahren zur kryptografischen Verarbeitung, umfassend das Bestimmen, in einer Gruppe endlicher Ordnung, die mit einer Operation versehen ist, und ausgehend von einem ersten Element (M) dieser Gruppe, eines zweiten Elements ($S_p$; P) gleich der Kombination, mittels der Operation, von Elementen gleich dem ersten Element (M) und in einer Zahl gleich einer ersten Zahl ($d_p$), wobei das Verfahren in einer elektronischen Vorrichtung (2) durchgeführt wird, die ein Speichermodul (6) umfasst, wobei die erste Zahl ($d_p$) in dem Speichermodul (6) in maskierter Form gespeichert wird, wobei das Verfahren durch die folgenden Schritte gekennzeichnet ist:

- Erhalten (E10; E32) einer zweiten Zahl (d"), die bestimmt wird, indem zu der ersten Zahl ($d_p$) die Ordnung oder ein Vielfaches der Ordnung hinzugefügt wird;
- Bestimmen (E12; E30) einer Zufallszahl (a);
- Bestimmen (E14; E34) eines Quotienten (Q; q) und eines Rests (R; r) unter Verwendung der euklidischen Division der zweiten Zahl (d") durch die Zufallszahl (a);
- Erhalten (E16; E36) eines dritten Elements ($E_1$; I) gleich der Kombination, mittels der Operation, von Elementen gleich dem ersten Element (M) und in einer Zahl gleich dem Produkt des Quotienten (Q; q) und der Zufallszahl (a);
- Erhalten (E18; E38) eines vierten Elements ($E_2$; J) gleich der Kombination, mittels der Operation, von Elementen gleich dem ersten Element (M) und in einer Zahl gleich dem Rest (R; r);
- Bestimmen (E20; E40) des zweiten Elements ($S_p$; P) durch Kombination des dritten Elements ($E_1$; I) und des vierten Elements ($E_2$; J) mittels der Operation,
wobei das Verfahren einen Schritt des Erstellens einer Maske gleich der Summe einer ersten Zwischenzahl und des Produkts aus einer zweiten Zwischenzahl und der Zufallszahl umfasst;
wobei der Schritt des Erhaltens der zweiten Zahl (d") einen Schritt des Anwendens der erstellten Maske umfasst, wobei der Quotient **(Q;** q) unter Verwendung der zweiten Zwischenzahl bestimmt wird und wobei der Rest (R; r) unter Verwendung der ersten Zwischenzahl bestimmt wird.

**2.** Verfahren nach Anspruch **1,** umfassend einen Schritt des Bestimmens einer weiteren Zufallszahl, wobei die zweite Zahl (d") erhalten wird, indem zu der ersten Zahl ($d_p$) das Produkt der weiteren Zufallszahl und der Ordnung hinzugefügt wird.

**3.** Verfahren nach Anspruch 1 oder **2,** wobei die erste Zwischenzahl und die zweite Zwischenzahl durch Zufallsziehung bestimmt werden.

**4.** Verfahren nach Anspruch 1 oder **2,** wobei die erste Zahl ($d_p$) durch eine Ausgangsmaske maskiert gespeichert wird und wobei die zweite Zwischenzahl und die erste Zwischenzahl als Quotient beziehungsweise Rest der euklidischen Division der Ausgangsmaske durch eine Zweierpotenz bestimmt werden.

**5.** Verfahren nach einem der Ansprüche 1 bis **4,** wobei die Gruppe die multiplikative Gruppe Z/pZ - {0} ist, in der p eine Primzahl ist, wobei die Ordnung gleich (p-1) ist.

**6.** Verfahren nach einem der Ansprüche 1 bis **4,** wobei die Gruppe eine Untergruppe von Punkten einer elliptischen Kurve ist, wobei die Operation eine Addition von Punkten der elliptischen Kurve ist.

**7.** Verfahren nach einem der Ansprüche 1 bis 4, wobei die Gruppe eine multiplikative Untergruppe von Z/pZ - {0} ist, in der p eine Primzahl ist, und wobei die Ordnung ein Divisor von (p-1) ist.

**8.** Elektronische Vorrichtung (2), umfassend einen Prozessor (4) und ein Speichermodul (6), das Anweisungen eines Computerprogramms speichert, die dazu ausgestaltet sind, wenn diese Anweisungen von dem Prozessor (4) ausgeführt werden, in einer Gruppe endlicher Ordnung, die mit einer Operation versehen ist, und ausgehend von einem ersten Element (M) dieser Gruppe ein zweites Element ($S_p$; P) gleich der Kombination, mittels der Operation, von Elementen gleich dem ersten Element (M) und in einer Zahl gleich einer ersten Zahl ($d_p$), die in dem Speichermodul (6) in maskierter Form gespeichert ist, mittels eines Verfahrens zu bestimmen, das die folgenden Schritte umfasst:

- Erhalten (E10; E32) einer zweiten Zahl **(d''),** die bestimmt wird, indem zu der ersten Zahl ($d_p$) die Ordnung oder ein Vielfaches der Ordnung hinzugefügt wird;
- Bestimmen (E12; E30) einer Zufallszahl (a);
- Bestimmen (E14; E34) eines Quotienten (Q; q) und eines Rests (R; r) unter Verwendung der euklidischen Division der zweiten Zahl (d'') durch die Zufallszahl (a);
- Erhalten (E16; E36) eines dritten Elements ($E_1$; I) gleich der Kombination, mittels der Operation, von Elementen gleich dem ersten Element (M) und in einer Zahl gleich dem Produkt des Quotienten (Q; q) und der Zufallszahl (a);
- Erhalten (E18; E38) eines vierten Elements ($E_2$; J) gleich der Kombination, mittels der Operation, von Elementen gleich dem ersten Element (M) und in einer Zahl gleich dem Rest (R; r);
- Bestimmen (E20; E40) des zweiten Elements ($S_p$; P) durch Kombination des dritten Elements ($E_1$; I) und des vierten Elements ($E_2$; J) mittels der Operation,

wobei das Verfahren einen Schritt des Erstellens einer Maske gleich der Summe einer ersten Zwischenzahl und des Produkts aus einer zweiten Zwischenzahl und der Zufallszahl ist;

wobei der Schritt des Erhaltens der zweiten Zahl (d'') einen Schritt des Anwendens der erstellten Maske umfasst, wobei der Quotient (Q; q) unter Verwendung der zweiten Zwischenzahl bestimmt wird und wobei der Rest (R; r) unter Verwendung der ersten Zwischenzahl bestimmt wird.

9. Computerprogramm, das Anweisungen umfasst, die dazu ausgestaltet sind, ein Verfahren nach einem der Ansprüche 1 bis 7 durchzuführen, wenn diese Anweisungen von einem Prozessor (4) ausgeführt werden.


**Claims**

1. Cryptographic processing method comprising determining, in a group of finite order provided with an operation and from a first element (M) of this group, a second element ($S_p$; P) which is equal to the combination, by means of said operation, of elements which are equal to the first element (M) and which are equal in number to a first number ($d_p$), the method being implemented within an electronic device (2) comprising a storage module (6), the first number ($d_p$) being stored in the storage module (6) in masked form, the method being **characterized by** the following steps:

   - obtaining (E10; E32) a second number (d'') determined by adding said order or a multiple of said order to the first number ($d_p$);
   - determining (E12; E30) a random number (a);
   - determining (E14; E34) a quotient (Q; q) and a remainder (R; r) using the Euclidean division of the second number (d'') by the random number (a);
   - obtaining (E16; E36) a third element ($E_1$; I) which is equal to the combination, by means of said operation, of elements which are equal to the first element (M) and which are equal in number to the product of the quotient (Q; q) and the random number (a);
   - obtaining (E18; E38) a fourth element ($E_2$; J) which is equal to the combination, by means of said operation, of elements which are equal to the first element (M) and which are equal in number to the remainder (R; r);
   - determining (E20; E40) the second element ($S_p$; P) by combining the third element ($E_1$; I) and the fourth element ($E_2$; J) by means of said operation,

   the method comprising a step of constructing a mask which is equal to the sum of a first intermediate number and the product of a second intermediate number and said random number;
   wherein the step of obtaining the second number (d'') comprises a step of applying the constructed mask, wherein the quotient (Q; q) is determined using the second intermediate number and wherein the remainder (R; r) is determined using the first intermediate number.

2. Method according to Claim 1, comprising a step of determining another random number, wherein the second number (d'') is obtained by adding the product of the other random number and said order to the first number ($d_p$).

3. Method according to Claim 1 or 2, wherein the first intermediate number and the second intermediate number are determined by random selection.

4. Method according to Claim 1 or 2, wherein the first number ($d_p$) is stored masked by an initial mask and wherein the second intermediate number and the first intermediate number are determined as the quotient and remainder, respectively, of the Euclidean division of the initial mask by a power of two.

5. Method according to one of Claims 1 to 4, wherein said group is the multiplicative group Z/pZ - {0}, where p is a prime number, said order being equal to (p-1).

6. Method according to one of Claims 1 to 4, wherein said group is a subgroup of points of an elliptic curve, said operation being an addition of points of the elliptic curve.

7. Method according to one of Claims 1 to 4, wherein said group is a multiplicative subgroup of Z/pZ - {0}, where p is a prime number, and wherein said order is a divisor of (p-1).

8. Electronic device (2) comprising a processor (4) and a storage module (6) storing computer program instructions which are designed, when these instructions are executed by the processor (4), to determine, in a group of finite order provided with an operation and from a first element (M) of this group, a second element ($S_p$; P) which is equal to the combination, by means of said operation, of elements which are equal to the first element (M) and which are equal in number to a first number ($d_p$) stored in the storage module (6) in masked form, by means of a method comprising the following steps:

   - obtaining (E10; E32) a second number (d") determined by adding said order or a multiple of said order to the first number ($d_p$);
   - determining (E12; E30) a random number (a);
   - determining (E14; E34) a quotient (Q; q) and a remainder (R; r) using the Euclidean division of the second number (d") by the random number (a);
   - obtaining (E16; E36) a third element ($E_1$; I) which is equal to the combination, by means of said operation, of elements which are equal to the first element (M) and which are equal in number to the product of the quotient (Q; q) and the random number (a);
   - obtaining (E18; E38) a fourth element ($E_2$; J) which is equal to the combination, by means of said operation, of elements which are equal to the first element (M) and which are equal in number to the remainder (R; r);
   - determining (E20; E40) the second element ($S_p$; P) by combining the third element ($E_1$; I) and the fourth element ($E_2$; J) by means of said operation,

   said method comprising a step of constructing a mask which is equal to the sum of a first intermediate number and the product of a second intermediate number and said random number;
   the step of obtaining the second number (d") comprising a step of applying the constructed mask, the quotient (Q; q) being determined using the second intermediate number and the remainder (R; r) being determined using the first intermediate number.

9. Computer program comprising instructions which are designed to implement a method according to one of Claims 1 to 7 when these instructions are executed by a processor (4).

# Fig.1

# Fig.2

```
REC.M ⎤⌐ E2
  ↓
DET.Sₚ ⎤⌐ E4
  ↓
DET.S_q ⎤⌐ E6
  ↓
DET.S ⎤⌐ E8
```

$$\text{REC.M} \quad E2$$
$$\downarrow$$
$$\text{DET.S}_p \quad E4$$
$$\downarrow$$
$$\text{DET.S}_q \quad E6$$
$$\downarrow$$
$$\text{DET.S} \quad E8$$

# Fig.4

$$\text{DET.a} \quad E30$$
$$\downarrow$$
$$\text{DET.d"} \quad E32$$
$$\downarrow$$
$$\text{DET.q,r} \quad E34$$
$$\downarrow$$
$$\text{DET.I} \quad E36$$
$$\downarrow$$
$$\text{DET.J} \quad E38$$
$$\downarrow$$
$$\text{DET.P} \quad E40$$

# Fig.3

$$\text{MAJ.d}_p \quad E10$$
$$\downarrow$$
$$\text{DET.a} \quad E12$$
$$\downarrow$$
$$\text{DET.Q,R} \quad E14$$
$$\downarrow$$
$$\text{DET.E}_1 \quad E16$$
$$\downarrow$$
$$\text{DET.E}_2 \quad E18$$
$$\downarrow$$
$$\text{DET.S}_p \quad E20$$

13

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **M. CIET** ; **M. JOYE**. Virtually) Free Randomization Techniques for Elliptic Curve Cryptography''. *ICICS 2003, LNCS*, 2003, vol. 2836, 348-359